Europäisches Patentamt

European Patent Office

Office européen des brevets

(11) Publication number: **0 345 199**
**A2**

## (12) EUROPEAN PATENT APPLICATION

(21) Application number: **89600009.8**

(22) Date of filing: **30.03.89**

(51) Int. Cl.⁴: **B 60 C 23/00**

(30) Priority: **06.04.88 GR 88100234**

(43) Date of publication of application:
**06.12.89 Bulletin 89/49**

(84) Designated Contracting States:
**AT BE CH DE ES FR GB IT LI NL SE**

(71) Applicant: **Tsagas, Nikolaos**
**L. Thrakos 3**
**GR-67100 Xanthi (GR)**

(72) Inventor: **Tsagas, Nikolaos**
**L. Thrakos 3**
**GR-67100 Xanthi (GR)**

(54) **A device for indicating, on the vehicle's control panel inside the driver's cabinet during driving or stopping, the minimum and the maximum pneumatic pressure limits (lower and upper safety thresholds) in the inflated tyres of the vehicle.**

㉗ A device for indicating, on the vehicle's driving panel during driving or stopping, the minimum and the maximum pressure limits (lower and upper thresholds) which is inside the inflated tyres of the vehicle. The device, which can transmit the dangerous limits of the pressure in the inflated tyres into the driving panel, can operate with the help of two isolated metallic strips (2, 3 or 151, 152) which play the role of a plate or cylindrical capacitor respectively, of one electronic circuit (27, 26, 25, 24, 23, 22, 21, 20, 19, 18, 17, 16, 15, 12, 11, 10, 9, 8, 5, 7, 3, 2, 32, 1, 28, 4, 6, 34, 29, 30) and of one pressure gauge (transducer) (1) which is a kind of an electric switch of the above circuit. One of the metallic strips (2 or 151) is placed on the rotating wheel and the other strip (3 or 152) is fixed on the non-rotating frame of the vehicle's chassis near to the wheel and very close to the first metallic strip so that to be a plate or cylindrical air capacitor. The electronic circuit produces alternative voltage in the ends of the coil (10) and when the pressure gauge close a circuit, by grounding the plate (2) on the metallic frame of the wheel (rim), in case of dangerous pressures, an alternating current flows in the circuit, which activates the photodiode (5).

Fig 1b

EP 0 345 199 A2

## Description

### A device for indicating, on the vehicle's control panel inside the driver's cabinet during driving or stopping, the minimum and the maximum pneumatic pressure limits (lower and upper safety thresholds) in the inflated tyres of the vehicle.

The present invention which relates to the apparatus for indicating, on the vehicle's control panel during driving or stopping the minimum and the maximum pneumatic tyre pressure limits, consists of a special electronic circuit, a special pressure gauge (transducer) placed to the existing valve of the wheel, a special system of three metallic strips for each wheel and a network of coaxial cables. One of the metallic strips can be placed either around on the external surface of the lateral vertical side of the tyre or it can be covered by a layer of rubber on the vertical side of the tyre and the other two electrically insulated strips are fixed on a proper position of the not rotating part of the vehicle near and parallel to the first strip without making contact with it. These two strips are connected with the driving panel through a coaxial cable by which a signal is transmitted from the rotating wheel to the driving panel. The device operates with only one battery (accumulator which is the car's battery and it needs no additional batteries, while the signals are transmitted from the rotating metallic strip which is embodied inside the rubber of the tyre to the not rotating strips through the air without solid contacts (carbon bruches).

Such devices are obviously very useful, which can operate as safety devices, indicating the dangerous limits of the pneumatic tyre pressure inside the inflated tyres during the driving of the vehicle. Therefore the damage of the tyres can be avoided by preventing the pressure to exceed either the upper safety limit which is due to the over heating because of friction (damage of the ballbearing, overload of the brakes, high atmospheric temperature, friction with the asphalt surface road) or to exceed the lower safety pressure limit because of the air leaking. In the past a patent No 3, 930 223 DEC.30.1975 from USA has been awarded to the same inventor N.F.Tsagas for another type of the present invention.

Pressure gauges of different types have been invented in the past by various inventors for measuring the pneumatic pressure in the inflated tyres of a vehicle and indicating the safety pressure limits on the driving panel. Some of these pressure gauges have used solid contacts (carbon brushes) on the wheels which do not work well under bad wheather conditions and also they have the disadvantage of the decay (destruction) of the contact substances (carbon brushes). Some other have used one small battery for each wheel. This is also a disadvantage because during the time these batteries will be exhausted and there will be difficalties for checking and replacing the exhausted batteries. Also some of the invented pressure gauges were of big size and expensive. The aim of the present invention, as it is described , is to improve all these disadvantages. The device according to the present invention has the characteristic that it solves the problem of transfering signals from the rotating wheels to the driving panel indicating the dangerous pressure limits of the inflated tyres without using any contact systems (carbon brushes). This problem is solved by using three electrically isolated metallic strips for each wheel. The first one is a complete circular annular strip which is placed on or is embotied in the rubber of the circular vertical side of the tyre and it rotates with it. The other two strips are fixed on a non-rotating part of the vehicle near and a fixed distance from the first strip independently of the position of the wheel at the curves. The signal is transmited from the first strip to the second, through the air, without these strips to be in contact. The signal from the second strip can be transmited to the driving control panel through a coaxial cable. According to the invention it would be desirable the shape of the metallic strips to be also cylindrical.

The present invention at the same time with the above problem solves also the problem of not using more than one battery that is for each wheel not an individual battery is used but the device itself operates with only the car's battery for any number of wheels.

In combination to the solution of the above problems, according to the present invention, the problem of the pressure gauge is also solved, which is of simple construction by durable material, light, not expensive and can be applied to already existing valves of the wheels. The pressure gauge consists of one durable resilient rubber or metallic membrane of good elasticity which moves along its axle (of pressure gauge) and this movement of membrane is depending on the tyre pressure (conversion of pressure into mechanical displacements of membrane) and so the pressure gauge becomes a switch which connects electrically the first strip with the metallic wheel's rim in case of dangerous limits of the inflated tyre pressure. According to the present invention various other pressure gauges could be used which consist of closed curved tubes or two elongated metallic strips soldered along their edges of perimeter or cylindrical tubes with very thin walls which form foldings of wavy form like bellows. All the pressure gauges can be fixed in the existed tyre valves which are used to inlet air in the interior of the tyres or in other valves which can be added on the metallic rim of the wheels especially for these pressure gauges. Finally according to this invention, the special electronic circuit has the characteristic property to produce alternative signal of certain frequency and volatage which can be transmitted from the rotating metallic strip to the second non-rotating strip through the air. The signal then arrives from the second strip into the driving cabinet through the coaxial cable.

The advantages of this invention are mainly the transmission of the signals between the two first isolated metallic strips to be in conduct and therefore to be worn out because of the friction.

Hence the use of conduct systems, as carbon brushes, which must be substituted quite often, is avoided. The pro posed pressure gauge is small and light and can be fixed to the already existed air inlet valves in the interior of the wheels. This pressure gauge is simple and not costly. There is only one electronic circuit used for many wheels. The circuit is also simple and not costly.

The car's battery is only used and therefore the use of one battery for each wheel is avoided. The metallic strips, which play the role of the transmitter and the receiver of the signals transmitted through the air, are isolated and therefore are not affected from the weather conditions. From the above it is obvious that the present invention has a great number of advantages.

A way of application of this invention is described below refering to the figures which accompany it and explain it with clarity and technical detail so it can be understood and any misunderstanding can be avoided.

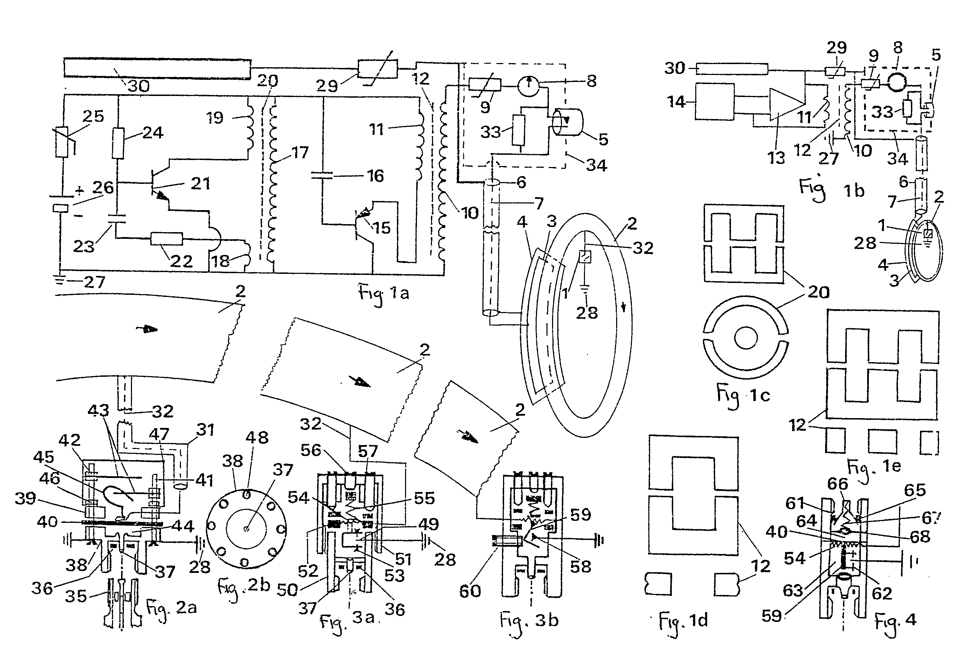

Figure 1a is a general view of all the parts of the apparatus according to the invention which consists of the electronic circuit, the isolated metallic strips system and the pressure gauge. The isolated metallic strips system consists of a metallic ring (complete circular annular strip) which is fixed on the revolving wheel in a special way or it is embodied in the rubber of the tyres and to two other parts of the rings which are parallel to the first. All the above strips are parallel to the vertical surface of the tyre. The first ring with the part of the second ring consist one plane capacitor.

Figure 1b gives the general principle of the operation of the apparatus by block diagram.

Figure 1c is the longitudinal and transverse cross section of the core of one transformer, which is a part of the electronic circuit, in the figure 1a.

Figure 1d is the longitudinal and transverse cross section of the core of the second transformer in the figures 1a and 1b.

Figure 1e is also the longitudinal and transverse cross se ction of another type of core for the second transformer, in the figures 1a and 1b.

The figure 2a is a detailed view of one pressure gauge and of one part of the wheels valve in which the pressure gauge is placed. The principle of the operation of this pressure gauge depends on the elastic properties of one durable rubber membrane ( a rubber layer of certain thickness) making airproof one small volume which communicates with the interior of the tyre. The elastic membrane expands or contracts according to the air pressure and therefore increases or decreases its curvature. A thin wire of special characteristics and shape is fastened on the surface of the other side of the membrane which moves along the axis of the pressure gauge according to the pressure. This wire moves between two other special wires which are in an adjustable distance. The figure's scale is very close to physical dimensions. It is possible for the rubber membrane to be substituted by metallic membrane with elastic properties.

Figure 2b is a transversal cross section of the pressure gauge of figure 2a, in the position where the membrane is applied.

Figure 3a is a detailed description of another type of pressure gauge. The principle of the operation of this pressure gauge is based on the elastic properties of one spring which presses proportionally to the applied air pressure one membrane made by a substance with elastic properties. The figure's scale is also near to the physical dimensions.

Fig. 3b is also a detailed description of one pressure gauge which has small differences from the previous one.

Fig. 4 is one detailed description of another type of pressure gauge where its operation is based on the elastic properties of a compressed gas which is contained in a little chamber. The dimensions of this pressure gauge can be very small.

Fig. 5a is one detailed description of another type pressure gauge where its operation is based on the property of one curved metallic tube which tends to be linear when one of its ends is closed and to the other end an air pressure is applied. Another type of pressure gauge can use a tube made by an elastic or flexible plastic material (instead of metallic) with strong inner walls which contain a thin steel wire, internally along the axis of the tube. The steel wire can have one or more spirals suitably orientated to the curving point of the tube.

Figures 5b, 5c, 5d and 5e give the view of the metallic tubes, of different shapes which can be applied and operate in the pressure gauge of figure 5a.

Figure 6a is a detailed view of a longitudinal section of a pressure gauge with a curved tube made by a rubber or a flexible plastic material with strong walls and inside along the axis of this tube there is one spring which follows the shape of the tube.

Figure 6b is a transverse cross section of the pressure gauge which is shown in figure 6a, at the base of the pressure gauge which is fixed on air inlet valve of the tyre.

Figure 7a is the view of another type of pressure gauge with the tube forming complete circle around its one end and which is applied to the air inlet valve of the tyre. This pressure gauge is of a small height which is an advantage for avoiding great centrifugal forces.

Figure 7b is the view of one pressure gauge which differs from the pressure gauge of figure 7a in that except the cyrcular shape it also has weaving shape along its axis. It also differs in the orientation of the part of the electric conducts.

Figure 8a is a view of one small linear metallic tube and of two metallic strips.

Figure 8b is the view of the tube and the strips of the previous figure, which have been welded in their ends.

Figure 8c is the view of the curving of the welded strips.

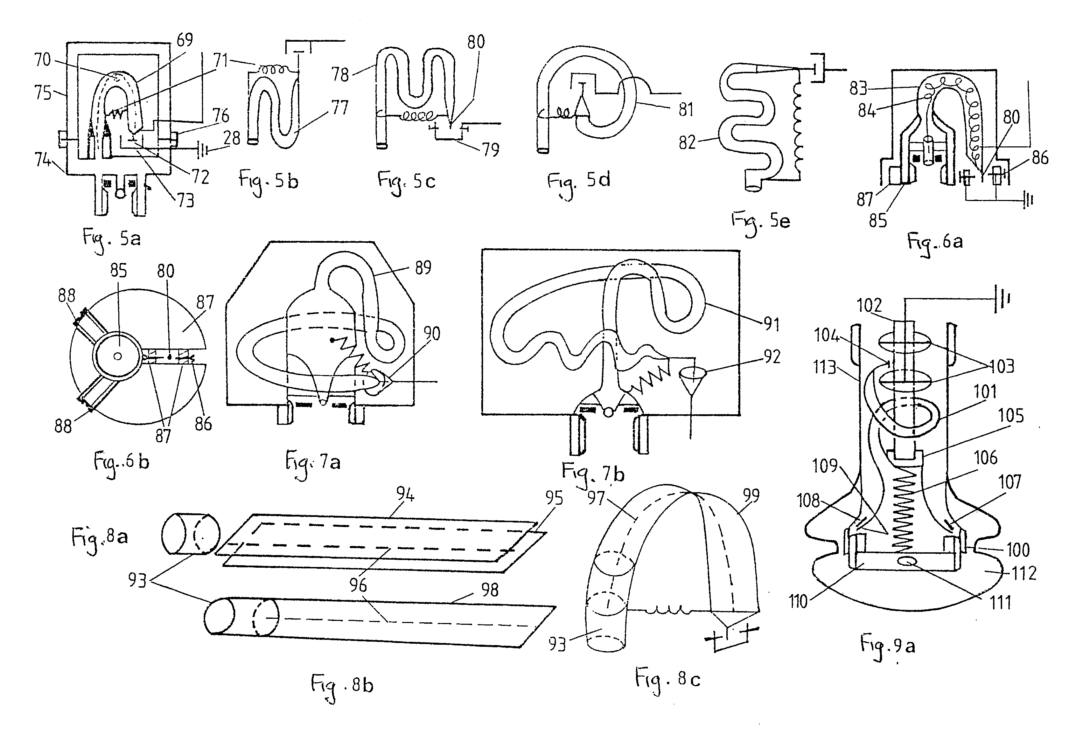

Figure 9a is a view of one air inlet valve in the tyre which at the same time operates as a pressure gauge. The pressure gauge consists of one tube which is closed on its upper end. This tube surrounds spirally around one thin stem from insulating material along the valve's axis. With this stem the spiral tube is pressed when the inflated tyre is filled up with air, which passes through the opening which is formed between the external walls of pressure gauge and the open end of the spiral tube. A spring presses up the spiral tube and its ends press airtighty, one elastic flange. So the air from the interior of the tyre cannot come out.

Figure 9b is one variation of the pressure gauge shown in Fig. 9a, where instead of the spiral tube a cylindrical one with very thin walls is used which form foldings of wavy shape like bellows.

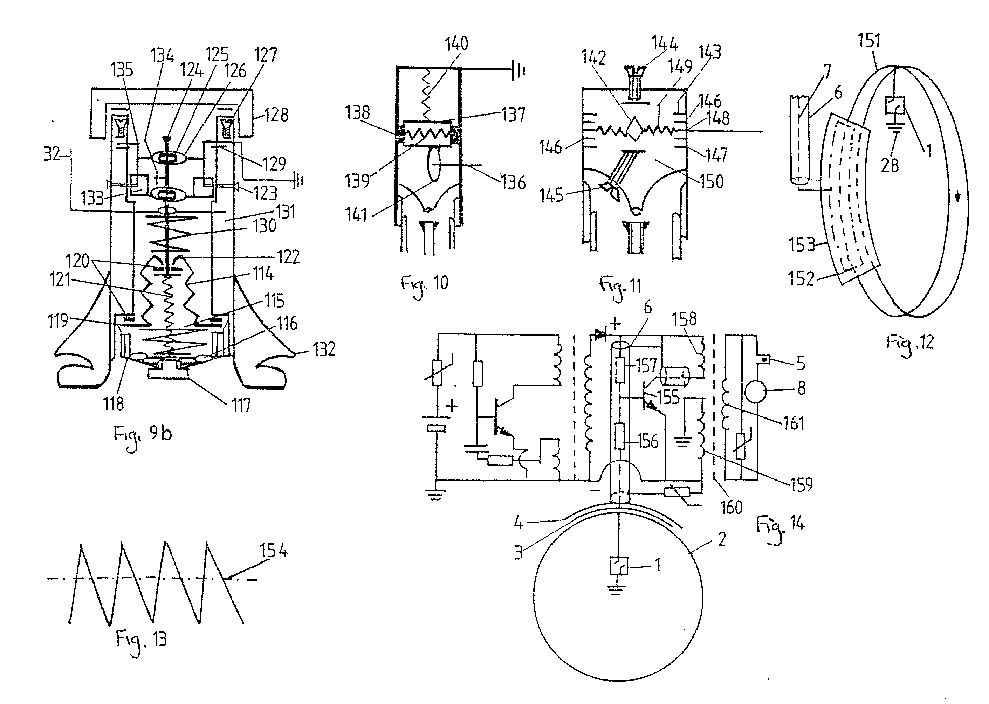

Figure 10 is the view of another type of pressure gauge which operates with one small piston, with flange on its perimeter which is pressed by a spring circumferentially all the way out. The air pressure is balanced by another spring.

Figure 11 is a view of another type of pressure gauge which operates with an elastic metallic membrane, which is surrounded circumferentially by one rubber flange. The distances of the electric conducts which give the indications of the dangerous limits of the tyre pressure are adjusted with two screws.

Figure 12 is a view of another system of three isolated metallic strips for the transmission of the signal from the rotating wheel to non rotating part of the vehicle without conduct. The first strip is the external surface of a cylinder (without the bases) where the axis of this cylinder coinsides with the wheel's axis and its radius (cylinder's radius) is greater of that of the metallic frame of the wheel (rim) and smaller of the external radius of the tyre. The circumference of the base of this cylindrical metallic strip, ends either near to the rubber surface of the tyre or it is embodied in the rubber of the tyre. The width of the cylindrical strip (cylindrical's height) can be small, equal to 1 or 2cm. The other two strips form a part of a complete cylinder's surface (about the one third) and they are fastened on the non-rotating section of the vehicle very close to the first strip. The radius of these cylinders are slightly larger or smaller than the radius of the first strip's cylinder. The first and second strips form a cylindrical capacitor. The pressure gauges must be locked using special mechanism.

Figure 13 is a waveform of an alternative signal transmitted between the first rotating strip and the second non-rotating strip of the isolated metallic strips system.

Figure 14, eventually, is a modified view of figure 1a.

In the above figures it is shown an apparatus capable to indicate the unsafe limits of the pneumatic air-pressure in the interior of a tyre via an audio or a light signal on the driving table of a vehicle, where this apparatus basically consists of a pressure gauge (1) a system of metallic strips (2, 3, 4 or 151, 152, 153), a multivibrator or oscillator or AC voltage or current generator (14), an AC voltage or current amplifier (13) a low to high AC voltage transformer (10, 11, 12), a photodiode or loudspeaker (5), two power potensiometers (9, 29), one power resistor (33), a coaxial cable network (6, 7), an electrostatic screening system (34), analog or digital milliamperes metering unit (8) and a long enough isolated cable (30) for the AC current absorption of parasitic capacitance.

According to the present invention the apparatus is capable to indicate through a photodiode's audio or light signal (5) that the pneumatic air-pressure safety limits in the tyre's interior have been exceeded. The pressure gauge (1) is working like a circuit's switch which consists of the parts (2, 3, 4, 5, 6, 7, 8, 9, 19, 33, 34) after grounding the metallic chassis of the vehicle (27) and of the wheel (28). The metallic strip (2) is shaped like a circular ring of which the centre coincides with the wheel's rotating axis and its plane is parallel to the vertical rubber surface or it is enbodied in the rubber tyre. The surface of this strip which is faced with the surface of the tyre is covered by isolating material of specific thickness and as less dielectric constant value as possible, like alkyd isocyanate foam, teflon, etc. The other side of the metallic strip (2) is covered by isolating material with large dielectric constant. A similar procedure is followed in case when the strip (2) (which is of very small thickness) enbodied in the rubber of the tyre, by meaning that the strip's (2) surface which is turned to the tyre's interior (filled with air) is covered with very low dielectric constant material. The other strip's surface instead, is covered with material of very high dielectric constant. The strip (2) must be very close to the external surface of the tyre's rubber.

The metallic strip (3) is only a part of a complete circular ring (about one third of the annular strip (2)) with radius equal to that of the annular strip (2) and is fixed on appropriate non-rotating part of the vehicle, very close and parallel to the annular strip (2). As it is shown in Figure 1a the two annular strips (2,3) made up a plane capacitor of the circuit (28,1,5,33,8,9,10,27) with a thin layer of air as the dielectric material between the planes of this capacitor. The rest of the dielectric material in this capacitor is a very thin layer of insulating material whith very large dielectric constant. This material covers the internal sides of the strips (2,3) which face one another.

The metallic strip (4) is also another part of a metallic strip which is slightly larger than the strip (3). This strip (4) is placed at the back side of the strip (3) in parallel position so that to seald electrostatically the strip (3) from the metallic chassis of the vehicle. The strip (4) is covered by a thin layer of insulating substance from both sides and is adjacent to the strip (3).

The strip (2) is connected to a pressure gauge with a very thin conductor (32) which is covered by a relatively thick layer of insulating material (31) of a very small dielectric constant. The central conductor (7) of one coaxial cable is connected to the strip (3) with its one end and to the photodiode (5) with the other. A power resistance (33) of 1.5 ko up to about 4 ko (2.2 ko with tolerance 10% for a maximum signal) is connected in parallel with the above photodiode (5) of which the other end is connected in series to an analogical or digital mili ammeter of alternative current (8) and a variable power resistance (9) which in its other end is con nected to one end of the secondary coil (10), of one transformer of high alternative voltage (10,12,11). This apparatus can operate and without the mili-amperemeter (8). One end of the external conductor (6) of the above mentioned coaxial cable (6,7) is connected with the strip (4) and its other end is connected with the end of the coil (10) with which the resistance (9) is also connected.

The central conductor (7) and strip (3) are screened by the external conductor (6) and the strip (4) respectively from the paracitic capacitance currents (noise) which is the capacitance between the central conductor (7), the strip (3) and the vehicle's metallic frame (chassis) which is the grounding (27) of the electronic circuit connected to the negative of the vehicle's accumulator (battery), the electrostatic screening system (34), which is a very thin metallic surface, can screen all the surrounding parts (33,5,8,9) from the parasitic capacitance current. A great fraction of paracitic current, which is due to the parasitic capacitances, is absorbed from the isolated conductor (30). The absorption fraction depends on the magnitude of the variable resistance (29) and on the size of the conductor (30).

The current due to the parasitic capacitances in the wheel cannot be absorbed by the conductor (30) and therefore this current is reduced by using insulating materials of small dielectric constant (alkyd isocynate foam, teflon, air etc) which are inserted between the parts (1, 32, 2) and the metallic frames of the wheel and the metallic grid in the rubber of the tyre. The reduction of this parasitic current depends on the thickness and the dielectric constant of the insulating materials which were mentioned above (large distance and small dielectric constant). The aim of using a very thin conductor (32), which is surrounded from an insulating material of relatively large thickness and small dielectric constant (31) for the connection of the pressure gauge (1) with the strip (2), is to reduce the current of the parasitic capacitance between the conductor (32) and the matallic frame of the wheel.

The multivibrator (14) consists of one power transistor NPN(21) of about 2A, 300V, 1MHz, one capacitor (23), two resistances (22, 24), one variable power resistance (25) and one transformer (20, 17, 18, 19) with three coils (17, 18, 19). The transformer's core (20) is ferrite of special permeability. The longitudinal and transverse cross section of the core (20) is shown in figure 1c. The negative of the accumulator (26) is connected to the vehicle's metallic frame which is the grounding (27). The multivibrator gives to the ends of the coil (17) alternative voltage of 50 kHz to 1MHz frequency. Other kinds of multivibrators or oscillators or alternating voltage generators with intigrated circuits and crystal oscillators can be used. The amplifier (13) consists of one power transistor PNP(15) about 10A, 400V, 1MHz, one capacitor (16) and one transformer (12, 10, 11) with two coils (10, 11). The two coils are apart from one to two cm distance to avoid parasitic current. The core of the transformer (12) is ferrite of special permeability. In figure 15 the longitudinal and transverse cross section of one type of core (12) is shown while in figure 1e the longitudinal and transverse cross section of another type of core is shown. The multivibrator's output is amplified from some mWatt to some Watt. The frequency and the output power of the signals of the multivibrator depend mainly on the capacity of the capacitor (23) and the values of the resistances (22, 24, 25).

Some values and data for various parts of the oscillator (14) and the amplifier (13) are given below. For the resistance (24) the value is of 62 up to 52 k$\Omega$, while for the resistance (22) the value is of 12 up to 0.5k$\Omega$. The resistance (25) is a variable power resistance of 40 up to 5$\Omega$. The capacitor (23) is of some $\mu$F up to 500 pF and 100V, the power transistor (21) is NPN of 1 up to 3A, 100 up to 300V and 0.5 up to 5MHz. The coil (18) is about of 100 turns wire with diameter 0.31 which is externally isolated, the coil (19) of about 220 turns with diameter 0.31 and the coil (17) is about of 500 turns with diameter 0.31. The core (20) is a ferrite of special permeability of the type 45/25-3B5/A9A-$\mu$160. The capacitor (16) is of some $\mu$F capacitance and voltage of 100 up to 400V. The transistor (15) is a power PNP transistors with characteristics 2 up to 10 A, 100 up to 400 V and 0.5 up to 5 MHZ. The coil (11) is about of 40 turns wire which is externaly is olated with diameter 0.4 and the coil (10) is about of 1000 turus with diameter of 0.32, the core (12) is a ferrite of special permeability of the type 144C-0-T26-0L/0.25-80. All the above values can vary from one minimum value up to one maximum for increasing the output signal and to reduce the parasitic signal. Different types of cores of transformers also can be used.

According to the present invention when the air pressure in one of the tyres exceeds the safety limits then the pressure gauge (1) which operates as an electric switch, connects the strip (2) to the grounding (28) which is the metallic frame of the wheel (rim). This frame is connected through the ball-bearing and its axis to the metallic frame of the vehicle (chassis). Between the two frames there is an electric resistance which obtains great values during the vehicle's motion. This increase is due to the lubricant which covers the globules of the ball-bearing during the vehicle's motion. This resistance is counterbalanced with the variable resistance (9) which during the motion must take small values for the case when the light of photodiode (5) becomes very weak. When the pressure gauge (1), which operates as a switch, is activated then in the circuit (28,1,2,3,7,5,9,10,27) flows an alternative current of the intensity which depends also on the capacitance of the plane capacitor which is formed by the strips (2,3) which it depends mainly on the area of the surface and the distance between these strips.

According to the present invention the apparatus operates generally as an oscillator or a multivibrator (14) which produces an alternetive current or voltage (signal) of 10 kHZ frequency up to 10 MHZ. This signal is amplified by a current amplifier (13) from some mWatt to some watt and after words is transformed to a high voltage signal by the transformer (10, 11 ,12). The coil (10) of the above transformer feeds the circuit (28,1,2,3,5,10,27) with main alternative current of intensity which depends on the voltage and the signal's frequency at the ends of the coil (10) and also on the impedance of the above circuit and on the capacitance of the capacitor which is formed by the strips (2,3). The pressure gauge (1) opens or closes the circuit in case of regular or irregular air pressures in the inflated tyre and in the circuit flows respectively parasitic or main alternative current. The photodiode (5) must be activated (transmits light) by the main alternative current and must not be activated by the parasitic current. For this reason the main current must be as big as possible while the parasitic as possible. Already ways and factors which minimize the parasitic current and maximize the main current have been mentioned above. According to one prefered utilization of the invention the pressure gauge (1), which operates as an electric switch for the grounding of the strip (2), consists of one durable rubber membrane (40) (rubber layer of certain thickness and of great elasticity) making air proof the small cylindrical volume (44) which communicates with the interior of the tyre through the small tube (37) and the valve (35). The main parts of the pressure gauge (1), which are of cylindrical shape (38,39), close together circumferentially the membrane (40) by the help of six or eight or more screws (41) which pass through the holes (48) and are tightened by the screw nuts (46). On the other side of this membrane's surface, which faces the cover (47), a thin elastic wire with special curved shape (45) is fastened. The surface of the wire (45) is covered by a metal of good electric conductivity (silver plated). The wire (45), which is connected with strip (2) through a very thin conductor (32), can move vertically between two elastic silver plated wires (43) following the membrane's movements. These wires (43) are fixed to two longer screws (41) by two screw nuts (42) for each screw so that their distance from the wire (45) can be adjusted according to safe pressure limits, which are desired, in order for the pressure gauge to opera te. The wires (43) are connected with the grounding (28). The valve's ends (35), when it is screwed in the part (38), press the elastic flange (3) insuring air proof communication between the space (44) and the interior of the tyre. The valve (35) opens by the help of the small tube (37). The elastic membrane (40) is expanded or is shrinked according to the air pressure of the tyre and therefore its curving increases or decreases and so it forces the wire (45) to move between the wires (43) and to make conduct in case of dangerous pressure by grounding the strip (2) with the metallic frame of the wheel (28).

The transverse cross-section of the part (38), in the position where the membrane is applied, is circular and on this cross-section there are circumferentially eight holes (48) and also the small tube's cross-section (37). It is possible the rubber membrane (40) to be substituted with metallic membrane with elastic properties.

The parts (38, 39) are made by hard, durable and light plastic or metal or alloy which can resist in mechanical strains and can easily be elaborated. The cover (47) has very thin walls and is also made by similar material like that of all the parts (38, 39).

According to the present invention another type of the pressure gauge (1) consists of the metallic membrane (54) which is applied between two rubber flanges (52) which tighten circumferentially the membrane (54) by the screws (57). In between the upper flange (52) and the screws (57) there is another flange made by hard plastic which helps the screws (57) to compress better the flanges (52). The metallic membrane (54) which has good elastic property, is electrically isolated from the main parts (50, 51) of the pressure gauge and is connected with the strip (2) through the conductor (32). The flange (52) below and the flange (36) can make air proof the space which is surrounded by the membrane (54) and the part (50). In this space, which communicates with the interior of the tyre through the tube (37) and the valve (35) moves one metallic stem in a shape of semi upside Π of its end with two metallic conducts or pins (53) in its ends. This metallic stem is soldered with the membrane (54) which is pressed up by the air and down by the spring (55). The pressure of this spring (55) is adjusted by the screw (56) so that in case of regular pressure the membrane (54) to be remain flat (plane). When the pressure decreases or increases the membrane (54) curves and induces down or up the metallic stem, where in case of dangerous pressure limits the pins (53) make conduct with the silver plated horizontal stem or wire which is fixed on a metallic part of the pressure gauge grounded to the metallic frame of the wheel. Therefore the pressure gauge also in this case plays the role of a switch which connects or disconnects electically the strip (2) with the wheel's metallic frame and therefore with the vehicle's chassis.

According to the present invention, in another type of pressure gauge which is a variation of the previous one with small defferences, the upper elastic flange (52) does not exist and only the lower plastic flange (52) made by hard plastic is remaining. Furthermore here there is a screw (60) which adjusts the position of the stem (59) for electric conduct with the pins (58) in the case of non-regular pressure. Care must be taken to that the screw (60) to close air-tightly the inner space where its end lies. In the three types of pressure gauges which have been mentioned above the conducts (45, 53, 59) are connected with ring of strip (2) which can be formed on the vertical rubber surface of the tyre with special metallic paint (very thin layer) which is covered with one kind of isolating material for protection. Between the metallic paint and the rubber surface of the tyre there is a material with small dielectric constant. The width of strip's (2) is about 2 cm as it is shown in figures 2a, 3a and 3b.

According to the present invention in one different type of pressure gauge the spring (55) is substituted by gas or air which fills under pressure the space (65) and it is equal to the normal pressure in the interior of the tyres. The gas or air under pressure have elastic properties and can play the role of the spring. The size and the weight of such pressure gauges can be small. The stem which has the contacts (62) can be simple and can have one of the two contacts in space (63) and the other one in space (64) a fact that can reduce even more the size of the pressure gauge. The spring (67) is fixed on the base (68) and presses the valve (66) which presses the rubber flange (65) at the end (61) in order to close air-tightly the space (64).

The base (68) has a hole in its middle for the communication of the spaces which it separates.

Another type of a pressure gauge, according to the present invention, can depend on the tendency which the curved tube (69) has to become linear when one of its ends is closed and the other communicates with the interior of the tyre which is filled whith air under pressure. The spring (71) counterbalances the pressure so that when it is normal to avoid conduct of the two pins (72) at the closed tube end with the two ends of the stem (73). The stem (73) is electrically isolated and it is connected with the metallic frame of the wheel (28). The end of the tube with the two pins (72) is connected electrically through one thin conductor (wire) with the strip(2). Instead of the spring (71) a thin stainless steel wire can be used internally along the tube (69) which can have one or more turns (70) at the greater curvature and with a suitable orientation so that the plane of the turns can coinside with the curving plane of the tube. The cover (75) is made by thin and light material and it is fixed on the base (74) with a system of screws (76). The tube (69) can be metallic or rubber or of flexible plastic with resistable walls and of different curved shapes like (77,78,81,82,83 e.t.c.). The size of such pressure gauges is small.

In case that the tube (69) or (83) is from rubber or flexi ble plastic then the stainless steel wire (70) can be replaced by one spring (84) along the tube. The closed and of the tube (83) which ends up on a thin silver plated pin (80) goes up to the open end (85) which is screwed on the air inlet valve of the tyre. This end (85) is fixed on base (87) and is supported by two screws (88).

The base (87), which is a part of cylinder of small height and is made from light and resistable material, it has one radial slit where internally the pin (80) can move radially along this slit between the conducts (86) the distance of which is adjusted from the pin (80).

Figure (6b) is one transverse cross section of the base where the radial slit with the conducts (86), the pin's cross section (80), the cross section of the tube's open end (85) and the two screws (88) can be seen.

The tube (89), which is another variation of a pressure gauge, forms a complete circle around its open end which communicates with the interior of the tyre. One spring joins the closed end of the tube (89) with one constant point of the other end of the same tube. During the increase or the reduction of the air tyre pressure the pin, which is an extension of the closed end of the tube, comes in conduct with the internal conical metallic surface (90). This conical surface can come closer or go away from the end of the pin. This pressure gauge is of a small height which is an advantage in order to avoid large centrifugal forces.

The tube (91), in comparison to the tube (89), except the circular shape around its vertical end which is joined with the inlet air valve, has also weaving shape along the tube's axis. Also the orientation of the surface (92) is different than that of the conical surface (90).

The two longitudinal metallic strips (94, 95), after having been soldered to each other along their edges and with the tube (93) and get curved, give the view of the curving of the soldering strips (99) which are also soldered with the cylindrical tube (93).

One stainless steel wire or one thin elastic tube (96,97) is in the middle and along the soldering strips. The above tube (93,97,99) which is a combination of cylindrical and plain tube, can be used to make another type of pressure gauge.

According to the present invention one pressure gauge can operate at the same time as an air inlet valve in the interior of the tyre. The tube (101) is of spiral shape around one thin stem (102) made by insulating material along the valve's axle. The stem is hollow internally for the cables to pass through which connect the electric metallic disk-like surfaces (103) with the metallic frame of the wheel which is the grounding (28). The lower end of the stem (102) is supported by one cavity or hollow (105) of the spiral tube (101). The spring (106) presses the tube (101) to close airtightly the ends (109) with the external walls (108) of the valve. The ends (109) are covered by a rubber flange (107) for air tightness. The screw (110) in the lower end (100) of the external tube of the valve can lock the spring (106). The valve communicates with the interior of the tyre through the opening (111). The rubber layer (112) which covers the ends (108) fixes the valve air tightly in the internal side of the wheel's metallic frame. The upper closed end of the spiral tube ends up to two pins (104) which are connected electrically with the strip (2). The pins (104) are in conduct with the disk-like surfaces (103) in case of dangerous pressures in the interior of the tyre because of the movement of the spiral tube. For the inlet of the air in the interior of the tyre the stem (102) is pressed down and so the air comes in through the opening which is formed between the lower ends of the spiral tube (109) and the inner walls of the external cover (108). The valve which combines the properties of the pressure gauge and the inlet air valve as it was described above its possibly to be bigger than these which exist today. A variation of the above pressure gauge which combines the properties of the valve according to the present invention, it uses a cylindrical tube with very thin walls, which form foldings of wavy shape like bellows (114). The spring (121) presses the stem (124) which closes airtightly the upper ends (122) of the tube (114) with the help of the upper flange (120). The spring (115) applies on the lower ends (119) of the tube (114) which press the lower flange (120) in order to achieve airtightness in the inner space of the tube (114) which communicates with the interior of the tyre through the openings (116) of the plug (118) which secures the spring (115). The screw (117) secures the spring (121). The upper end of the stem (124) has one small stem with two pins (134) which moves vertically between the two conducts (126). The stem (124) passes through the holes (125) which are formed by the conducts (126) the distance of which to the pins (134) can be adjusted by the screws (123, 127) and the conducts holding system (133). The pins (134) are connected with the strip (2) and the conducts (126) are connected with the grounding (28). The upper cover (128) gives a security airtightness to the pressure gauge which is fastening onto the metallic frame (rim) by the rubber (132) and this pressure gauge has the frame (131). The stem (124) follows the vertical displacements of the ends (122) of the cylindrical tube (114) according to the pressure variations in the interior of the tyre and so the pins (134) are in conduct with the surfaces (126) in case of dangerous pressures. During the filling with air of the tyre the stem (124) is pressed to let in the air through the opening which is formed between the ends (122) and the upper flange (120).

A simple form of a pressure gauge consists of one piston (137) with one flange (138) which is pressed with spring (139) either radially from the centre to the circumference or circumferentially for airtightness. The spring (140) presses the piston (137) which balances the air pressure from the other side of the piston in the area which communicates with the interior of the tyre. The ring (141) is in conduct with the silver plated wire (136) in case of dangerous pressures.

At last another simple type of pressure gauge according to the present invention consists of one metallic elastic membrane (149) of which the elastic properties balance the air pressure in the space of the pressure gauge (150) which communicates with the interior of the tyre. The membrane (149) has on its centre two metallic pins (142) one for each side, which come in conduct with the ends of the screws (144,145) the distances of which to the pins are adjusted. Therefore in case of dangerous pressures electric connection of the metallic strip (2) takes place with the grounding (28) through the metallic membrane (149), the pins (142) and the screws (144,145).

The rubber flanges (146) surround from both sides circumferentially the membrane (149) in the position (148) for airtightness of the space (150). The lower flange (146) is fixed circumferentially on one semi-base (147) which stands out circumferentially in the inner of the pressure gauge while the upper flange (146) is covered by one metallic flange (143) which presses by a screw system the flanges (146) and the membrane's circumference (148) to the semibase (147).

According to the present invention another system of three isollated metallic strips (151,152,153) can be used in order to transmit the signal from the wheel to non rotating part of the vehicle without conduct. The first strip (151) consists of a cylindrical surface the axis of which coinsides with the wheel's axis, and its radius is bigger than the radius of the metallic frame of the wheel (rim) and smaller than the outer radius of the tyre. This strip (151) can either be covered by a thin layer of rubber in the tyre. The strip is embodied inside the rubber in a special constraction of the tyres or to be out of the rubber and to be fastened by strong plastic holders of small dielectric constand on the circumference of the metallic frame of the wheel (rim) there where the lead balance weights are fixed. In the second case of fastening the circumference of one base of the cylindrical metallic strip terminates near to the rubber surface of the tyre. The strip (151), in both cases of fixing, is in the side of the wheel which faces the metallic frame of the vehicle. The width of the cylindrical strip (151) can be about equal to one or two cm. This strip can be in some distance from the metallic frame of the wheel and the wire guard netting in the rubber of the tyre in order to minimize the parasitic capacitance current so that not to turn on the photodiode (5). This wire guard netting can be substituted by a special plastic guard netting (kevlar) in order to reduce the parasitic capacity.

The two other strips (152,153) consist a part of the surface of the cylinders (one third about) and are fixed on the non-rotating part of the vehicle. The radius of the cylindrical surfaces of these strips (152,153) are slightly bigger or smaller of the radius of the cylindrical surfaces of the first strip (151). The strips (151,152) consist part of the cylindrical capacitor for the signal's transmission from the wheel to the driving panel. The dielectric material which is in between the two strips (151,152) it should be of high dielectric constant while the dielectric material which is between the strip (151) and the metallic frame of the wheel as well as of the wire guard netting in the rubber of the tyre must have small dielectric constant. Between the metallic strips (151,152) alternative voltage is applied when the pressure gauge (1) closes the circuit in case of dangerous air pressures in the tyre and brings in electric conduct between the strip (151) with the grounding (28) and then with the grounding (27) through the ball-bearing and its axis. Due to the alternative voltage an alternative current flows in the cirrcuit which turns on the photodiode (5). The strip (152) is connected through the central conductor (7) of the coaxial cable (7,6) with the photodiode (5), the variable resistance (9), the coil (10), and the grounding (27). The third metallic strip (153) touches and covers that surface of the strip (152) so that the (152) to be between the (153) and (151). The strip (153) is connected through the external conductor (6) of the coaxial cable (6,7) to the end of the coil (10) with which the screening (34) is connected and the conductor (30) through the variable resistance (29). This system (153, 6,34,29,30) is used in order to minimize the current's parasitic capacitance.

To avoid large parasitic capacitances, which could energize the photodiode (5), more circuits (28,2,3,4,5,10,27) or (28, 151,152,153,5,10,27) are used that is for each one of such circuit a small number of wheels is used. Therefore more photodiodes of which each one responds to a small number of wheels are used in the driving panel. In this way the wheel which has the dangerous pressure is detected faster. One technique to avoid parasitic currents is to use one special relay current governor in the circuit (28,2,3,4,10,27) instead of the photodiode (5). The relay current governor which is (activated) energized only by the main current and not by the current which is due to the parasitic (stray) capacitance, closes one separate circuit which consists of one electric bulb 12V and the vehicle's accumulator (battery). One technique to reduce parasitic capacitances is the following: The strip (2) is not a complete ring (annulus) but only a part (segment) of it which has a surface about equivalent to the surface of the strip (3).

According to the present invention when one of the wires (43) comes in conduct with the wire (45) in the pressure gauge (1) and the circuit (28,1,2,3,5,10,27) is closed then between the first rotating strip (2) or (151) and the second non rotating strip (3) or (152) an alternative voltage is produced which is applied to the inlet of one oscilloscope gives the waveform (154). It has been found from experiments that the intensity of the alternative current which flows the circuit depends also on the kind of the waveform which is produced from the generator of alternative voltage.

According to the present invention the apparatus can operate also with the electronic circuit which is shown in the figure 14 that is a variation of figure 1a. Also in one variation of the invention some conducts of special materials could be used between the rotating part of the wheel and the non-rotating part, which are consisted of suitable ceramics or other materials which have conducting properties and are worn out hardly. In this case the circuit is simple that is, it consists of one pressure gauge (1) the contact system, one electric bulb and the vehicle's accumulator with the groundings (27) and (28). The contact system consist of one electrically isolated metallic ring, which is fixed on the metallic frame of the wheel or on the rubber surface of the tyre and also it consists of the contact material which touches continually on the metallic ring. The pressure gauges can be secured (locked) on the valve with a special mechanism. Also the present invention can transmit signals from the wheels to the driver's cambinet with electromagnetic coupling by using electromagnetic coils on the rotating and not rotating part of the vehicle instead of the system of strips (2,3,4) or (151,152,153).

**Claims**

1. A device for indicating, on the vehicle's control panel inside the drivers cambinet at any time during driving or stopping, the maximum and the minimum pressure limits (lower and upper safety thresholds) in the vehicle's inflated tyres, consists of a special system of metallic strips (2, 3, 4) or (151, 152, 153) that are either one complete metallic circular annular strip (2) and two segments of metallic circular strips (3, 4) parallel to (2) or one complete metallic cylindrical surface (151) and two segments of co-axial metallic cylindrical surfaces (152, 153), where the strips (2, 3) from a plane condenser and (151, 152) from a cylindrical condencer of the circuit (28,1,32,5,8,9,10,27) of a high voltage transformer (10,11,12) with a ferrite core of small permeability, one amplifier (13) or (17, 16, 15, 11), one analog or digital oscillator or multivibrator or alternating current generator of frequencies 10kHz to 10MHz (17, 18, 19, 20, 21, 22, 23, 24, 25, 26, 27) or (14), one conductor (30) which is insulated or earthed big enough to absorb the noise alternating current which is due to the parasitic capacitance, one photodiode or loudspeaker (5) which emmits a signal to indicate the dangerous limits of the tyre pressure,two variable resistances (9, 33) to counterbalance the variable electric resistance which appears in the rotating ballbearings on the axle of the wheels and is due to the lubricant substance that covers the ballbearing's globules during the rotation of the wheels, one variable resistance (29) to compensate between the noise current of stray (parasitic) capacitance and the main current so that the photodiode (5) should not be activated by the noise current but only by the main current, one only battery (26) which is the car's battery, one system (4, 153, 6, 34) to screen from the stray (parasitic) capacities and this system consists of the strips (4, 153) and the external conductors (34, 6), finally of one pressure gauge (1) which acts as a transducer converting the changes of the air pressure inside the inflated tyre to mechanical movements of one diaphragm (40, 54) made by elastic durable material (rubber) or a tube that one of the ends is closed (69, 77, 78, 81, 82, 83, 89, 91, 101) or one bellows tube (114) so that the wire (45) can come in contact with one of the wires (43) or one of the pins (53, 58, 62, 72, 86, 104, 134) can come in contact with one of the wires (49, 59, 80) or with one of the conductors (73, 90, 92, 103, 126) where some of these contacts can be connected with the earth (28) and some of them with the strip (2) and therefore the pressure gauge (1) can play the role of a switch of the electrical circuit (28, 1, 2, 3, 7, 5, 9, 10, 27).

2. The device for indicating, on the driving panel the dangerous limits of the pressure in vehicle tyres, according to the claim 1, is characterized by the pressure gauge (1) which consists of one durable rubber membrane (40) (a rubber layer of certain thickness and of good elasticity) making air proof the small cylindrical volume (44) using six or eight or more screws (41) or other means of pressing and the screw nuts (46) to tighten the two cylindrical parts (38, 39) that close circumferentially the membrane (40), where its curvature can become proportional to air pressure in the vehicle tyres and therefore the air pressure variations are converted to the mechanical displacement of the membrane (40), where on the one side of this membrane a thin silver plating, elastic curved wire (45) is fixed, which is connected with the strip (2) by a very thin conductor (32), that is covered by a thick insulator of a small dielectric constant (31) and therefore the wire (45) by following the changes of the membrane curvature can move between two elastic silver plated wires (43) that are connected with the earth (28) and are fastened on the two longer screws (41) by two screw nuts (42) for each of the wires, so that the distance between the wires (43) can be regulated according to the safe limits of pressure (lower and upper thresholds) that the pressure gauge (1) is going to operate which therefore can work as an electric switch connecting or disconnecting elect rically the strip (2) or (151) with the wheel's rim (metallic frame of the wheel) closing the circuit (28, 2, 3, 5, 9, 10, 27) and an alternating current will turn on the photo emitting diode (5) or a loud speaker so that a light signal appears in the drivers cabinet panel. The pressure gauge (1) made by light, and durable material, is small, light, not expensive and it can be placed either to the existing valve of the wheel or to a separate valve on a proper position of the wheel's rim. The valve (35) opens with the tube (37). The screws and nuts can be substituted by pressing means. The shape of the wire (45) can be straight and its end is like a cross. The straight part of the wire (45) is surrounded by a small spring which presses the membrane (40). The cross end of the wire (45) can move between two contacts which are metallic parts of the metallic body of the valve which screwed on the back side of the wheels rim. The wire (45) is connected with the strip (2). The cross section (38) can be circular or elleptic.

3. The device for indicating, on the vehicle's driving panel during driving or stopping, the minimum and the maximum pressure limits (safety thresholds) in the vehicle's tyres according to the claims 1 and 2 is characterized by the pressure gauge (1) which can transform the alterations of the air pressure in the vehicle's tyre to mechanical displacement either of a membrane (54) with elastic properties or of a piston (137) which are pressed either by springs (55, 140) or by a compressed gas contained in a small chamber (64). The system of contacts (49, 53, 59, 58, 62) can be either in the compartment of the pressure gauge (1) which communicates with the interior of the tyre or in a compartment from the other side of membrane where the spring (55) or the compressed gas are present (situated). The elastic properties of the metallic membrane (149) can balance the air pressure.

4. The device for indicating, on the vehicle's driving panel during driving or stopping, the minimum and the maximum pres sure limits (safety thresholds) in the vehicle's tyres according to the claims 1, 2 and 3, is characterized by the pressure gauge (1) which can transform the alterations of the air pressure in the vehicle's tyres to mechanical displacements of one closed end (76, 80, 104) of various curved tubes (69, 77, 78, 82, 83, 89, 91, 99, 101) and the other end of those tubes communicates with the interior of the tyre. The displacement of the closed end of the tube is due to the tendency (feature) of the curved tube to become straight when a gas pressure is applied to the other open end of the tube. The pressure of the air is balanced either by the elastic feature (property) of the metallic tubes to keep (maitain) their curved shape or by the help of a spring (70, 71, 84, 96). The open end (85) is mounted on the base (87) and is fastened with the screws (88) where the cylindrical base (87) of a small height is made by light and durable material with a radial slid and the contact (80) can move inside this slid. The thin stainless steel wire (70) has one or more turns in the place of the greater curvature so that their plane coinsides with the plane of the curvature. The tube (93, 97, 99) is a combination of cylindrical and plane tube (flat) with a stainless steel wire (96, 97) or one thin elastic tube (96, 97) along the axis of the tube (99). The tube (101) has spiral shape around the stem (102) and the pressure gauge, which comprises the tube (101) combines also valve's properties for air inlet in the interior of the tyre.

5. The device for indicating, on the vehicle's driving panel during driving or stopping, the minimum and the maximum pressure limits in the vehicle's tyres (lower and upper thresholds) according to the claims 1, 2, 3 and 4, is characterized by the pressure gauge (1) which can convert the changes of the air pressure inside the vehicle's tyres to mechanical displacements of one end of cylindrical tube with very thin walls that form foldings of wavy shape like bellows (114). The air pressure is balanced by the spring (121) that presses and closes the two ends of the tube (114) making an airproof seal by the help of the flanges (120). The above pressure gauge also combines valve's properties for air inlet in the interior of the tyre.

6. The device for indicating, on the vehicle's driving panel during driving or stopping, the minimum and the maximum pressure limits in the vehicle's tyres (lower and upper thresholds), according to the claims 1, 2, 3, 4, and 5, is characterized by a system of three insulating metallic strips (2, 3, 4 or 151, 152, 153), that help in transmission of the pressure gauge indications from the rotating wheel to the driver's cabinet panel without the rotating strip (2 or 151) to touch and ruin by continuous friction the stationary strip (3 or 152). Two of the above metallic strips (2, 3 or 151, 152) play the role of a plate or cylindrical air capacitor which uses the property as a condenser in order a signal to be transmitted from the wheel to the driving panel.

Between the above metallic strips an alternating voltage is applied when the metallic strip (2 or 151) comes in electrical contact with the metallic rim of the wheel (28) that is connected electrically with the matallic chassis of the vehicle through the ballbearing and axle of the wheel. Because of the alternating voltage an alternating current flows through the circuit and turns on the photodiode (5) or loudspeaker which gives a luminous or audible signal. Therefore the signals are transmitted through the air without electrical contacts (brush contacts) which need often substitute. The metallic strip (2) which has the form of a very thin circular annulus, can be covered by a thin layer of rubber on the lateral vertical side of the tyres (special manufacturing of tyres) or can be fixed by strong plastic holders from the circumference of the rim where the leaden balance weight are fixed on the internal side of the rim. The plane of the annular strip (2) is parallel to the lateral vertical rubber surface of the tyre and some distance away from the wheel's rim not to generate a sufficient current of parasitic capacity that can turn on the photodiode (5). Current of parasitic capacity flows in the electric circuit, where is the photodiode (5), when there is not any electric contact between (45) and (43). The surface of the strip (2), which is facing the vertical rubber surface of the tyre, is covered by insulating material of certain thickness which has a very small dielectric constant in order to minimize the parasitic capacity between the metallic strip (2) and the wire guard netting which there is inside the rubber of the tyre. This wire guard netting can be substituted by a special plastic guard netting (kevlar) in order to reduce the parasitic capacity. The other side (surface) of the metallic strip (2) is covered by insulating material which has high dielectric constant. The same conditions are valid also for the case where the strip (2) (of very small thickness) is embodied inside the rubber of the tyres that is the surface of the strip (2) facing the interior of the tyre is covered by material of small dielectric constant while the other side (surface) is covered by a thin layer of material of high dielectric constant. The strip (2) must be very near to the external surface of the wheel's rubber. The metallic strip (3) is a part (segment) of a complete circular annular strip, approximately one third of the annular strip (2) of equal radius and is placed (fixed) in a proper not-rotating part of the vehicle very near and parallel to the annular strip (2). The annular strips (2 , 3) form a plane capacitor where in between the plates there is a thin insulating layer of high dielectric constant and a thin layer of the air. The strip (4), which is covered completely by insulating material, is slightly bigger than the strip (3) and is placed from the other side (back) of the strip (3) and in parallel position so that to screen electrostatically the three sides of the strip (3) from the metallic chassis of the vehicle and this strip (3) is connected with the external conductor (6) of the co-axial cable (6 , 7) to reduce the current of parasitic capacity. Circular annular strip (2) can be also formed on the vertical rubber surface of the tyre by special metallic paint. The metallic strips are not effected by weather conditions because the strips are insulated and for rainy weather the outer rubber surface of the tyres must be covered by a hydrophobia (water not loving) elastic material of small dielectric constant. Also another system of three metallic strips (151, 152, 153) can be used instead of the circular annular strips where the strip (151) is a complete cylindrical surface and its axis coinsides with the wheel's axis and also the length of the radius of the strip (151) is in between the radius of the wheel's rim and the outer radius of the tyre, the radii of the cylindrical strips (152, 153) are slightly bigger or smaller than the radius of the strip (151) and these strips (152, 153) are parts (segments) of complete cylindrical surfaces. The strip (151) is placed either on the rubber vertical surface of the tyre and is fastened by strong plastic holders of small dielectric constant on the circumference of the wheel's rim or it (151) is embodied inside the rubber of the tyre while the strips (152, 153) are fixed on the not rotating part of the vehicle. The same way of insulating and screwning for the circular strips is valid and for the case of the cylindrical strips. For the front wheels the strips (3 , 4) or (152 , 153) are fastened on a place which belongs to the steering wheel system. The wheel system can be electrically isolated from the metallic chassis of the vehicle. Also the above strip system can be fixed in any other proper place of the wheel so that to be protected by weather conditions and to increase the capacitance of the capacitor strip system.

7. The device for indicating, on the vehicle's driving panel during driving or stopping, the minimum and the maximum pressure limits in the vehicle's tyres (lower and upper thresholds) according to the claims 1, 2, 3, 4, 5 and 6, is characterized by one electronic circuit (28, 1, 2, 3, 4, 5, 6, 7, 9, 10 up to 34) which is used for the total number of wheels (any number of wheels). The final alternating main current depends on the frequency, magnitude and wave form of the alternating voltage of multivibrator or oscillator or alternating voltage generator (17, 18, 19, 20, 21, 22, 23, 24, 25, 26, 27 or 14) and on the amplifier (11, 15, 16, 17 or 13). The multivibrator, which consists of the resistances (25, 24, 22) with about 40Ω , 60Ω and 11Ω respectively, the capacitor (23) with 680 pF and 63 V, a power transistor NPN(21) with characteristics 2A, 300V, 1MHz (0.5 up to 5MHz) a transformer (17, 18, 19, 20) with a ferrite core (20) of special permeability and coils (17, 18, 19) with 500, 100 and 200 turns respectively, gives an alternative signal of some mWatt and frequency of about 50 kHZ. The isolated wire of the coils has 0.31 diameter. The frequency of the alternative voltage of the multivibrator can vary (variate) from 10kHz up to 10MHz. Also other kinds of multivibrators or oscillators or generators of alternative voltage with integrated circuits and crystal vibrators can be used. The frequency and the exit power of the signals of the multivibrator depends mainly on the capacity of the capacitor (23) (of some $\mu$F up to 500pF and 100V), on the resistances (24) (of 52k$\Omega$ up to 62k$\Omega$) and (22) (0.5k$\Omega$ up to 12 k$\Omega$) and on the variable resistance (25) (of 5$\Omega$ up to 40$\Omega$). This signal is amplified by the amplifier (11, 15, 16, 17) which consists of the transistor PNP(15) with characteristics 2A up to 10A, 400V, 0.5 up to 10MHz and the capacitor (16) of some $\mu$F which gives output of some Watts (about30V and 250mA). The transformer (10, 11, 12) with ferrite core (10) of special permeability and coils (11, 12) with high number of turns and big ratio of about 15 to 40, transforms the signal from low voltage and high current to high voltage and low current with which feeds the final circuit (27, 10, 5, 3, 2, 28). The distance between the coils (11, 12) is up to 2cm in order to avoid current of stray (parasitic) capacitance. The above values can be vary from aminimum up to a maximum value for increasing of the output signal and reducing of the stray (parasitic) capacitance current. Also different types of transformers can be used. The external line (6) of the coaxial cable is connected with the metallic strip (4) and the one end of the coil (10) to minimize the stray (parasitic) capacitance current (noise). The frequency of the signal can be vary from few kHz to some MHz. The final power output of the circuit can vary from some tens of mWatt up to some Watts. The variable resistance (9) counterbalances the variable electric resistance, between the metallic frame of the wheel's (rim) and the chassis of vehicle, which is due to the lubricant that covers the globules of ball-bearing during the rotation and increases with the rotation speed. The resistance (9) reduces automaticly by a logic system if the light of diode (5) becomes weak. The intensity of the main alternating current which activates the photodiode (5) depends mainly on the dielectric constant of the substance between the strips (2, 3) or (151, 152), the area of the strip surfaces and the distance between the strips (2, 3) or (151, 152), the voltage, the frequency and the kind of the signal waveform on the ends of the coil (10) as well as the impetance of the circuit (28, 2, 3, 5, 7, 8, 9, 10, 27). The power variable resistance (33), which is connected in parallel with the photodiode (5), takes values of 4k$\Omega$ up to 1.5k$\Omega$ with 2.2k$\Omega$ and a tolerance of 10% for maximum signal. The electronic circuit also contains a system of electrostatic screening (34) for stray (parasitic) capacities of the sections (33, 5, 8, 9) and various current conductors, one analog or digital milliamperometer (8) one isolated conductor (30) quite large for the absorption of the stray (parasitic) capacities of alternative current and one variable power resistance (29) for setting the current which is due to the stray capacities. So that this current must not activate the photodiode and at the same time the main alternating current not to be significantly attenuated. The electrostatic screening (34) is connected with the one end of the coil (10) with which the strips (4) or (153) are connected through the resistance (29). The whole system (34, 4, 153, 6, 29, 30) is used to minimize the stray (parasitic) capacity current. To avoid large stray (parasitic) capa cities, which could activate a loudspeaker or the photodiode (5) more circuits are used (28, 2, 3, 4, 5, 10, 27) or ( 28, 151, 152, 153, 5, 10, 27) that is for each such circuit a small number of wheels is used. So in the driving vehicle's panel more photodiodes are used of which each one corresponds in a small number of wheels. In this way the wheel which has the dangerous pressure is detected in shorter time. A technique to avoid the stray (parasitic) currents is to use a special relay current governor in the circuit (28, 2, 3, 4, 10, 27) instead of the photodiode (5). The relay current governor, which is energized only by the main current and not by the current which is due to stray (parasitic ) capacitance, closes one separate circuit which contains one electric bulb 12V and the vehicle's accumulator (battery). In another type of oscillator a gate NAND is used to produce square signals. The frequency of oscillation depends on the resistance which is connected with the output and input of the NAND and one capacitor between the input and the ground. The connected transistor NPN is used as an amplifier and is connected also with the coil (11) which is used as a load of the transistor. In order to increase the current there is a possibility to use two transistors in DARLINGTON connection instead of one. The situation is improved when the gap between the two parts of the ferrite core (12) is minimized and also when the number of turns in the coils (11) and (10) are inreased as more as possible. In some special case the outer conductor (6) can be connected only with the conductor (30) through the variable resistance (29) and not with the high voltage coil (10). One of these cases is that when the wheel system is isolated from the chassis of the vehicle and so that the conductor (30) can be connected with the negative of the battery and this conductor (30) can be also the metallic box of the electronic device. The other end of the coil (10) is connected with the isolated wheel system and there is not electrical conduct between the two coils (10) and (11). Also in order to reduce parasitic capacitances the strip (2) is not a complete ring (annulus) but only a part (segment) of it which has a surface about equivalent to the surface of the strip (3). The strip (3) is better to be surrounded by the strip (4) around the three sides so that no parasitic capacitances will be possible with the metallic chassis of the vehicle. The parasitic current will be cut off by a comparator. The area of the strips (2) and (3) can be increased by folding and making double the one surface and inserting the other one.

8. The device for indicating, on the vehicle's driving panel, the dangerous limits of the pressure in the tyre, according to the claims 1, 2, 3, 4, 5, 6, and 7, is characterized by an electronic circuit which has certain differences in comparison to the circuit of the claim 7. The second transistor (155) is NPN, the strip (3) is connected with the base of the transistor (155) and with the coil (158) of the second transformer (158, 159, 160, 161) through the resistors (156, 157), the strip (4) is connected with the collector of the transistor (155) and with the one end of the coil (159) through the external conductor of one coaxial cable, the photodiode (5) closes the circuit with the third coil (161) and is connected in parallel with one variable resistance.

9. The device for indicating, on the vehicle's driving panel during driving or stopping, the lower and the upper limits (lower and upper thresholds) of the pressure in the tyres, according to the claims 1, 2, 3, 4 and 5, is characterized by contacts of special substances (ceramic or other substances) which have conducting properties and they are worn out hardly. In this case the circuit is very simple, that is, it consists of one pressure-gauge (1) conduction system, an electric bulb and the vehicle's accumulator with the grounds (27) connected with the vehicle's chassis and (28) connected with the wheel's rim. The contact system consists of an isolated electrically metallic ring, which is placed on the metallic frame of the wheel (rim) or on the rubber of the tyre and of the substance which is in contact continually with the metallic ring. Also the present invention can transmit signals from the wheels to the driver's cambinet with electromagnetic coupling by using electromagnetic coils on the rotating and not rotating part of the vehicle instead of the system of the strips (2, 3, 4) or (151, 152, 153).

Fig. 6a

Fig. 5e

Fig. 5d

Fig. 5c

Fig. 5b

Fig. 5a

Fig. 6b

Fig. 7a

Fig. 7b

Fig. 8a

Fig. 8b

Fig. 8c

Fig. 9a

Fig.12

Fig.14

Fig.11

Fig.10

Fig.9b

Fig.13